# FASCICULE DE BREVET EUROPEEN

(11) **EP 1 232 778 B1**
(45) Date de publication et mention de la délivrance du brevet: **07.05.2008**
(21) Numéro de dépôt: 02290385.0
(22) Date de dépôt: 18.02.2002
(51) Int. Cl.: B01D 5/00

(54) **Condenseur**
Kondensator
Condensator

(30) Priorité: 20.02.2001 FR 0102257
(43) Date de publication de la demande: 21.08.2002
(73) Titulaire: COMMISSARIAT A L'ENERGIE ATOMIQUE, 75015 Paris (FR)
(72) Inventeur: Marvillet, Christophe, 13001 Marseille (FR)
(74) Mandataire: Ilgart, Jean-Christophe

(56) Documents cités:
- US-A- 3 943 774
- US-A- 4 175 935
- US-A- 4 545 792

## Description

On traite ici d'un condenseur.

Un condenseur est un appareil composé essentiellement de canaux d'écoulement d'un fluide gazeux dont on extrait certaines vapeurs après les avoir refroidies pour les condenser et avoir fait se déposer les gouttelettes de condensation sur les parois des canaux. Il existe un nombre assez important de genres de condenseurs selon la forme des canaux, qui peuvent être formés par des tubes ou par des plaques soudées en calandre, et les dispositions des écoulements du fluide à refroidir et des milieux froids présents entre lesdits canaux et qui produisent la condensation.

Un problème rencontré dans les condenseurs provient de l'irrégularité du refroidissement et de la condensation à travers les canaux. Le refroidissement du gaz est plus marqué sur les parois des canaux qu'au coeur puisque les milieux froids sont plus proches, ce qui fait commencer la condensation et le dépôt des gouttelettes à cet endroit. La diffusion moléculaire des vapeurs subsistantes vers les parois des canaux est cependant réduite en particulier pour les vapeurs dont les masses moléculaires sont élevées (exemple : composés organiques volatils) par rapport à celles de l'air ou de l'azote qui constituent souvent les gaz incondensables vecteurs. A mesure que le fluide continue de s'écouler et de se refroidir, la condensation gagne le coeur de l'écoulement où on voit apparaître des vésicules liquides ou parfois solides de vapeurs condensées, qui ne se déposent guère sur les parois et demeurent donc dans l'écoulement. La sortie de tels vésicules condensés des condenseurs est souvent inadmissible. Toutefois, on dispose en général des filtres à la sortie des condenseurs afin de retenir le givre qui se forme à partir de l'humidité du fluide ou d'autres impuretés, et ces filtres arrêtent aussi les vésicules condensés, mais leur colmatage peut devenir très rapide et ils doivent être évités dans certains procédés, comme de captations de vapeurs organiques (solvants) en sortie de réacteurs chimiques.

Le sujet de l'invention est un condenseur substantiellement exempt de la condensation centrale décrite ci-dessus et consécutive à la sursaturation du mélange. Selon l'invention, le condenseur comprend, outre des canaux de refroidissement du fluide et des milieux froids bordant les canaux, des milieux chauds qui bordent une portion des canaux opposée à la portion que bordent les milieux froids.

Le phénomène qu'on rencontre alors sera explicité plus loin. On doit aussi noter que le condenseur conforme à l'invention est avantageusement un condenseur à plaques. Un agencement particulièrement préféré comprend alors des canaux formés avec un coude à demi-tour, les milieux chauds étant constitués par le fluide lui-même coulant dans une première longueur des canaux, en amont du coude à demi-tour, les milieux froids étant placés à une deuxième longueur des canaux, en aval du coude à demi-tour. Ainsi, il n'est point besoin d'ajouter un agent de réchauffage, et une grande simplicité du fonctionnement du condenseur peut être maintenue.

Enfin, une grande régularité de refroidissement et de condensation est présente dans un condenseur conforme à ce qui précède, et où en outre les milieux froids sont placés à mi-largeur des deuxièmes longueurs des canaux, les divisant en moitiés, et les premières longueurs des canaux débouchent dans une paire des moitiés des deuxièmes longueurs des canaux par des paires des coudes à demi-tour, ayant des sorties divergentes.

Les échanges thermiques sont rendus plus favorables si les milieux froids (constitués par un fluide froid comme l'azote liquide, l'eau glacée, etc. s'écoulant dans un canal constitué de deux plaques adjacentes soudées) ne s'étendent que sur une portion, proche des coudes à demi-tour, des deuxièmes longueurs des canaux.

L'invention sera maintenant décrite plus en détail en référence aux figures suivantes :
- la figure 1 est un schéma explicatif des phénomènes d'échange de chaleur dans un condenseur ordinaire,
- la figure 2 est un schéma analogue à celui de la figure 1 pour un condenseur conforme à l'invention,
- et la figure 3 illustre un agencement de condenseur à plaques caractéristique de l'invention.

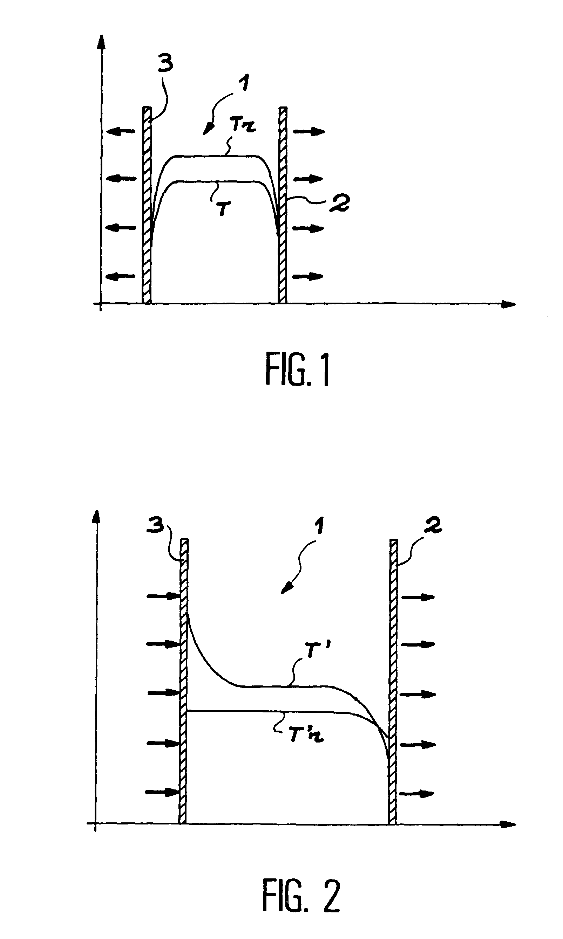

Le canal 1 de la figure 1 est contenu entre deux parois opposées 2 et 3 d'échange de chaleur derrière lesquelles se trouve un milieu froid (généralement un liquide soumis aussi à un écoulement à travers le condenseur). Il est indifférent que le canal 1 ait une section circulaire, les parois 2 et 3 étant deux portions d'un même tube, ou rectangulaire, les parois 2 et 3 étant alors des plaques planes et parallèles, ou autre. Dans tous les cas, la courbe de température du fluide chargé en vapeurs qu'on observe à travers la section du canal 1 est donnée par la courbe T, c'est-à-dire qu'un refroidissement notable est observé près des parois 2 et 3, mais qu'il est plus faible au coeur de l'écoulement. Quand le refroidissement du fluide est devenu suffisant en parcourant le canal 1, la condensation des vapeurs commence près des parois 2 et 3 et les gouttelettes condensées se déposent sur celles-ci.

La condensation gagne ensuite le coeur de l'écoulement, mais les vésicules liquides ou solides obtenus tendent à rester à cet endroit, sans se déposer sur les parois 2 et 3. Comme la concentration en vapeurs (condensées ou non) devient nettement supérieure au coeur de l'écoulement qu'à ses bords, les vésicules de condensation s'accumulent en brouillard à mesure que le fluide continue d'être refroidi, ce qu'on peut exprimer en traçant une courbe de température de rosée Tr à travers le canal 1, de la même façon que la température du fluide T : cette température de rosée Tr est supérieure à la température du fluide T, ce qui signifie que la condensation se produit partout, mais l'écart est plus important au coeur de l'écoulement malgré le refroidissement moindre là, à cause de la saturation plus grande du fluide.

Tout change avec l'invention, comme le montre la figure 2 : une des parois 2 reste affectée à la condensation des vapeurs par l'extraction de chaleur du fluide grâce à un milieu froid, mais l'autre des parois 3 sépare le fluide d'un milieu chaud, ce qui fait que si la température du fluide T' reste sensiblement constante au coeur de l'écoulement et décroissante près de la paroi froide 2, elle est croissante près de la paroi chaude 3 en raison de l'appoint de chaleur dont le fluide bénéficie là ; si l'appoint de chaleur est suffisant, la température du fluide T est partout supérieure à la température de rosée T'r sauf près de la paroi froide 2, ce qui signifie que le fluide n'atteint les conditions de saturation et de condensation qu'aux endroits où celle-ci peut se déposer et qu'on évite le phénomène néfaste de formation de brouillard au coeur de l'écoulement et la pollution qui en résulte en aval du condenseur. Le bon fonctionnement du condenseur dépend de plusieurs paramètres dimensionnels ou énergétiques, dont certains ne sont pas particuliers à l'invention. Le flux de chaleur fourni à la paroi chaude 3 sera normalement inférieur à celui qui sera prélevé à la paroi froide 2 afin que le bilan thermique global dont le fluide bénéficie reste négatif. Des canaux 1 étroits peuvent améliorer l'efficacité du condenseur en rendant la diffusion des vapeurs dans la direction latérale des canaux 1 plus sensible, ce qui accroît le débit de dépôt des condensats. Des canaux 1 plus longs améliorent aussi l'efficacité du condenseur tout en diminuant le niveau de sursaturation du fluide.

D'une manière générale, l'amélioration de l'efficacité du condenseur par un dépôt plus important de condensats n'est qu'un objectif secondaire de l'invention ; mais on doit souligner que l'apport de chaleur à la paroi chaude 3 ne réduit pas cette efficacité et peut même permettre de l'accroître sensiblement, malgré la disparition de la condensation sur la partie de surface des canaux 1 qui longe les milieux chauds, puisque la sursaturation du fluide est rejetée et renforcée près de la paroi froide 2, donnant un volume accru de condensats susceptibles de s'y déposer. Même si la diffusion moléculaire des vapeurs est faible en direction latérale, elle peut finir par abaisser sensiblement leur concentration dans le canal 1, y compris dans les régions les plus éloignées de la paroi froide 2.

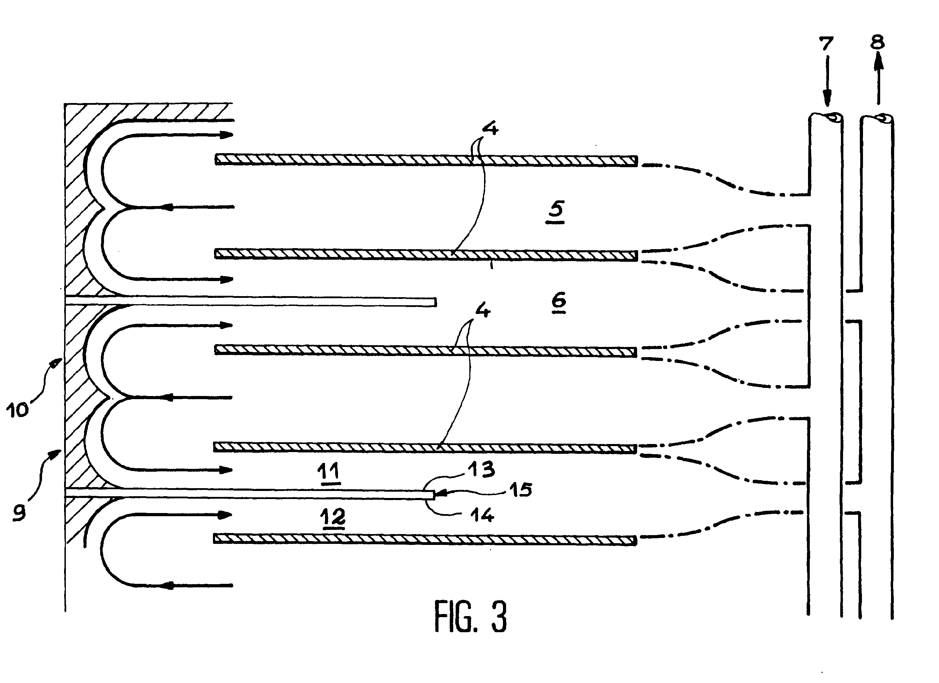

Un agencement concret est décrit à la figure 3. Il s'agit d'un échangeur à plaques parallèles. L'entrée du fluide dans les canaux d'entrée 5 s'effectue par un distributeur d'entrée 7, et la sortie du fluide par un distributeur de sortie 8. Ces distributeurs 7 et 8 sont placés l'un près de l'autre à une extrémité de même côté des canaux 5 et 6 ; les autres extrémités des canaux 5 et 6 sont reliées par des coudes à demi-tour, disposés en paire pour chacun des canaux d'entrée 5, chacune de ces paires comprenant un coude à gauche 9 dirigeant une moitié de gauche de l'écoulement d'un canal d'entrée 5 vers la moitié de gauche 11 du canal de sortie 6 situé à gauche, et un coude à droite 10 dirigeant une moitié de droite de l'écoulement de ce canal d'entrée 5 vers une moitié de droite 12 du canal de sortie 6 situé à droite du canal 5. En d'autres termes, les coudes à demi-tour 9 et 10 distribuent l'écoulement des canaux d'entrée 5 vers les canaux de sortie 6 par divergence. Les moitiés de gauche 11 et de droite 12 des canaux de sortie 6 sont séparées par des plaques supplémentaires 13 et 14 parallèles isolant des canaux 15, de largeur beaucoup plus petite et qui sont le siège d'un agent refroidissant. Avantageusement, les canaux d'agent refroidissant 15 s'étendent à partir des coudes à demi-tour 9 et 10 sur une longueur substantielle des canaux de sortie 6, mais pas jusqu'au distributeur de sortie 8. Les transferts thermiques s'effectuent avant tout dans les moitiés de droite et de gauche 12 et 11 des canaux de sortie 6, mais aussi en aval des canaux d'agent refroidissant 15 et dans les canaux d'entrée 5. En effet, le fluide froid des canaux de sortie 6 sert à opérer un refroidissement initial du fluide suivant, coulant encore dans les canaux d'entrée 5 ; ce refroidissement devrait de préférence être insuffisant pour condenser déjà les vapeurs, mais on doit probablement accepter et même provoquer la formation du givre dû à l'humidité du fluide dès les canaux d'entrée 5, puisque les vapeurs de nombreux corps usuels (notamment des composés organiques volatils COV dont la récupération est un important problème industriel) ne se condensent qu'à des températures plus basses et que des dépôts de givre sur les parois des canaux d'entrée 5 sont moins nocifs puisque ces canaux 5 sont larges et se colmateront donc plus lentement.

Les plaques supplémentaires 13 et 14, qui correspondent à la paroi froide 2 des figures 1 et 2, sont le siège des dépôts de condensats. Comme les canaux de sortie 6 sont étroits à cet endroit du fait de leur division par les canaux d'agent refroidissant 15, l'efficacité du condenseur est renforcée. Les plaques 4 jouent là le rôle de la paroi chaude 3 de la figure 2 en permettant un apport de chaleur modéré, suffisant pour la plupart des applications, venant du fluide dans les canaux d'entrée 5.

Des ailettes non représentées peuvent être placées dans les canaux 5 et 6 non loin des distributeurs 7 et 8, afin d'uniformiser la température du fluide à l'entrée et à la sortie tout en favorisant l'échange de chaleur des canaux d'entrée 5 aux canaux de sortie 6. Il convient cependant de ne pas disposer d'ailettes aux endroits de formation du givre ou de la condensation.

## Revendications

1. Condenseur comprenant des canaux de refroidissement (6) d'un fluide et des milieux froids (15) bordant les canaux, **caractérisé en ce que** les milieux froids ne bordent qu'une première portion (13 ; 14) des canaux, et des milieux chauds bordent une deuxième portion des canaux, opposée à la première.

2. Condenseur suivant la revendication 1, **caractérisé en ce qu**'il est composé surtout de plaques (4) de séparation des canaux.

3. Condenseur suivant la revendication 2, **caractérisé en ce que** les canaux sont formés avec un coude à demi-tour (9, 10), les milieux chauds étant constitués par le fluide lui-même coulant dans une première longueur (5) des canaux, en amont du coude à demi-tour, et les milieux froids sont placés à une deuxième longueur (6) des canaux, en aval du coude à demi-tour.

4. Condenseur suivant la revendication 3, **caractérisé en ce que** les milieux froids (15) sont placés à mi-largeur des deuxièmes longueurs (6) des canaux, les divisant en moitiés (11, 12), et les premières longueurs des canaux débouchent dans une paire des moitiés (11, 12) des deuxièmes longueurs des canaux, par une paire des coudes à demi-tour (9, 10), ayant des sorties divergentes.

5. Condenseur suivant la revendication 4, **caractérisé en ce que** les milieux froids (15) ne s'étendent que sur une portion, proche des coudes à demi-tour (9, 10), des deuxièmes longueurs (6) des canaux.

## Claims

1. Condenser comprising cooling channels (6) for a fluid and cold media (15) bordering the channels, **characterised in that** the cold media border only a first portion (13; 14) of the channels and hot media border a second portion of the channels, opposite to the first.

2. Condenser according to Claim 1, **characterised in that** it consists especially of plates (4) for separating the channels.

3. Condenser according to Claim 2, **characterised in that** the channels are formed with a 180° bend (9, 10), the hot media being constituted by the fluid itself flowing in a first length (5) of the channels, upstream of the 180° bend, and the cold media are placed at a second length (6) of the channels, downstream of the 180° bend.

4. Condenser according to Claim 3, **characterised in that** the cold media (15) are placed at mid-width of the second lengths (6) of the channels, dividing them into halves (11, 12), and the first lengths of the channels open into a pair of halves (11, 12) of the second lengths of the channels, via a pair of 180° bends (9, 10), having divergent outputs.

5. Condenser according to Claim 4, **characterised in that** the cold media (15) extend only over a portion, close to the 180° bends (9, 10), of the second lengths (6) of the channels.

## Patentansprüche

1. Kondensator mit Kühlkanälen (6) eines Fluids und die Kanäle säumenden kalten Medien (15),
**dadurch gekennzeichnet, dass** die kalten Medien nur einen ersten Teil (13; 14) der Kanäle säumen und warme Medien einen dem ersten Teil entgegengesetzten zweiten Teil der Kanäle säumen.

2. Kondensator nach Anspruch 1, **dadurch gekennzeichnet, dass** er vor allem durch Trennplatten (4) der Kanäle gebildet wird.

3. Kondensator nach Anspruch 2, **dadurch gekennzeichnet, dass** die Kanäle Umkehrkrümmer (9, 10) umfassen, wobei die warmen Medien durch das in einer ersten Länge (5) der Kanäle fließende Fluid selbst gebildet werden, stromaufwärts von dem Umkehrkrümmer, und die kalten Medien sich in einer zweiten Länge (6) der Kanäle befinden, stromabwärts von dem Umkehrkehrkrümmer.

4. Kondensator nach Anspruch 3, **dadurch gekennzeichnet, dass** die kalten Medien (15) sich in der Mitte der Breite der zweiten Längen (6) der Kanäle befinden und sie in zwei Hälften (11, 12) teilen, und die ersten Längen der Kanäle durch ein Umkehrkrümmerpaar (9, 10) mit divergierenden Ausgängen in einem Hälftenpaar (11, 12) der zweiten Längen der Kanäle münden.

5. Kondensator nach Anspruch 4, **dadurch gekennzeichnet, dass** die kalten Medien (15) sich nur über einen nahe bei den Umkehrkrümmern (9, 10) befindlichen Teil der zweiten Längen (6) der Kanäle erstrecken.
